# EUROPEAN PATENT APPLICATION

(11) **EP 2 107 815 A2**
(43) Date of publication of application: **07.10.2009**
(21) Application number: 09152995.8
(22) Date of filing: 17.02.2009
(51) Int. Cl.: H04N 9/79

(54) **Video recorder**

(30) Priority: 03.04.2008 JP 2008097410
(71) Applicant: Kabushiki Kaisha Toshiba, Minato-ku, Tokyo 105-8001 (JP)
(72) Inventor: Yamanashi, Naoki, Tokyo (JP)
(74) Representative: HOFFMANN EITLE

(57) **Abstract**

A video recorder (100) includes: a recording module (112) configured to record, in a storage device (113), first program data of a first broadcast directed to a mobile receiver and second program data of a second broadcast directed to a stationary receiver, the first broadcast and the second broadcast being broadcasted as a terrestrial digital broadcast; and a reproducing module (112) configured to control a display device to display a video image contained in either the first program data or the second program data stored in the storage device (113), wherein the reproducing module (112) controls the display device (109) to display the video image contained in the first program data in a first size smaller than a second size in which the video image contained in the second program data is to be displayed.

## Description

### CROSS REFERENCE TO RELATED APPLICATION(S)

The present disclosure relates to the subject matters contained in Japanese Patent Application No. 2008-097410 filed on April 3, 2008, which are incorporated herein by reference in its entirety.

### FIELD

The present invention relates to a video recorder and a method for recording and reproducing terrestrial digital broadcast programs.

### BACKGROUND

With the recent practical application of the terrestrial digital broadcast and the satellite digital broadcast such as the BS (broadcasting satellite) broadcast and the 110-degrees CS (communications satellite) broadcast, video recorder, which records and reproduces programs by recording program data that are transmitted by digital broadcast, has become widely used.

In the terrestrial digital broadcast implemented in Japan, each channel is divided into 13 segments, whereby its bandwidth can be used on a segment-by-segment basis. In such multichannel broadcast, broadcast for mobile receivers is performed by using a single segment (channel) (hereinafter referred to as "one-segment broadcast" ("one-seg" in short)) and single-channel high-vision broadcast or standard-image-quality broadcast (SDTV) of three channels is performed by using the remaining 12 segments.

Among conventional video recorder for recording program data that are transmitted by digital broadcast, there is proposed a video recorder configured as described in JP-A-2007-251803. In this video recorder, program data of a broadcast program for mobile receivers (program data for mobile apparatus) and program data of a broadcast program for stationary receivers (program data for stationary apparatus) that are separated from received program data are recorded on a recording medium, whereby both of the broadcast program for stationary receivers and the broadcast program for mobile receivers can be reproduced.

Another publication, JP-A-2007-221695, discloses an apparatus which receives a 1-segment broadcast or a 12-segment broadcast and changes the display area to make low image quality less noticeable in displaying a 1-segment broadcast program.

However, even if program data for mobile apparatus and program data for stationary apparatus are data of the same program, if an image is displayed on a display device for broadcast for stationary receivers by using program data for mobile apparatus, noticeable roughness appears in the displayed image, which is not preferable.

### SUMMARY

Therefore, one of objects of the invention is to provide a video recorder and a method for recording and reproducing programs without noticeable image roughness even in the case of using program data for mobile apparatus.

According to a first aspect of the present invention, there is provided a video recorder including: a recording module configured to record, in a storage device, first program data of a first broadcast directed to a mobile receiver and second program data of a second broadcast directed to a stationary receiver, the first broadcast and the second broadcast being broadcasted as a terrestrial digital broadcast; and a reproducing module configured to control a display device to display a video image contained in either the first program data or the second program data stored in the storage device, wherein the reproducing module controls the display device to display the video image contained in the first program data in a first size smaller than a second size in which the video image contained in the second program data is to be displayed.

According to a second aspect of the present invention, there is provided a method for recording and reproducing programs, the method including: recording, in a storage device, first program data of a first broadcast directed to a mobile receiver and second program data of a second broadcast directed to a stationary receiver, the first broadcast and the second broadcast being broadcasted as a terrestrial digital broadcast; reproducing a video image contained in either the first program data or the second program data stored in the storage device by controlling a display device to display the video image; and controlling the display device to display the video image contained in the first program data in a first size smaller than a second size in which the video image contained in the second program data is to be displayed.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing the configuration of a video recorder according to an embodiment of the present invention.
Fig. 2 is a flowchart showing the operation procedure of a simultaneous recording process for a mobile program.
Fig. 3 is a flowchart showing the operation procedure of another simultaneous recording process for a mobile program.
Figs. 4A and 4B show recording setting screens, wherein Fig. 4A shows an example where 1-segment recording is required, and wherein Fig. 4B shows an example where 1-segment recording is not required.
Fig. 5 is a flowchart showing the operation procedure of a correlating process.
Fig. 6 is a flowchart showing the operation procedure of a program list display process.
Fig. 7 is a flowchart showing the operation procedure of another program list display process.
Fig. 8 shows examples of filenames.
Fig. 9 shows an example program list of 12-segment broadcast.
Fig. 10 shows an example program list of 1-segments broadcast.
Fig. 11 shows an example remote controller.
Fig. 12 is a flowchart showing the operation procedure of a reproduction control process.
Fig. 13 shows examples of image sizes.
Fig. 14 shows an example electronic program table which is displayed on an LCD panel by using EPG data.

### DETAILED DESCRIPTION OF THE EMBODIMENTS

Hereinafter, embodiments of the invention will be described. In the following description, the same or similar components will be referenced by the same reference numerals, and detailed description thereof will be omitted.

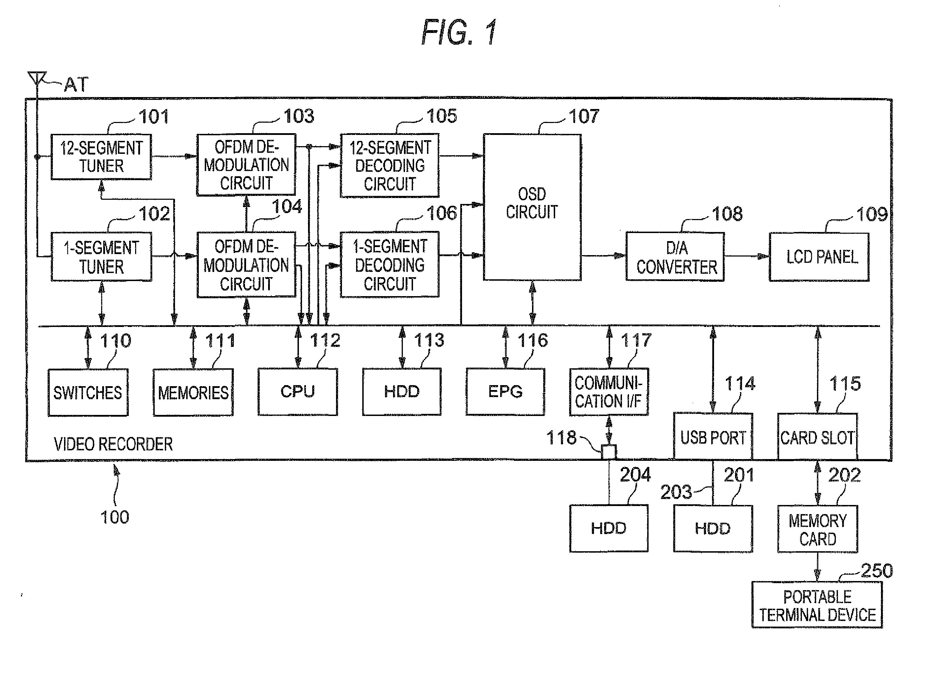

Fig. 1 is a block diagram showing the configuration of a video recorder 100 according to the embodiment of the invention. The video recorder 100 according to the embodiment is a stationary receiver which is equipped with a video display module for displaying video of a terrestrial digital broadcast program and a program recording module for controlling recording of the program.

The video recorder 100 according to the embodiment is configured so as to receive programs of 1-segments broadcast which is broadcast for mobile receivers and programs of 12-segment broadcast which is broadcast for stationary receivers.

As shown in Fig. 1, the video recorder 100 is equipped with first and second digital tuners 101 and 102, first and second OFDM (orthogonal frequency division multiplexing) demodulation circuits 103 and 104, first and second decoding circuits 105 and 106, and an OSD circuit 107.

The video recorder 100 is also equipped with a D/A converter 108, an LCD (liquid crystal display) panel 109, switches 110, and memories 111.

The video recorder 100 is further equipped with a processor (CPU) 112, an HDD 113, a USB (universal serial bus) port 114, a card slot 115, an EPG decoding module 116, a communication I/F 117, and a LAN terminal 118.

The first and second digital tuners 101 and 102 are supplied with broadcast waves that are received by a terrestrial digital broadcast antenna AT. Each of the digital tuners 101 and 102 performs reception processing of selectively receiving a signal component having a given frequency corresponding to a specified channel from the broadcast waves supplied from the antenna AT, and outputs the received signal component to the corresponding one of the first and second OFDM demodulation circuits 103 and 104.

The first digital tuner 101 is a receiving module for receiving a broadcast wave of 12-segment broadcast, and the second digital tuner 102 is a receiving module for receiving a broadcast wave of 1-segment broadcast. The 12-segment broadcast is terrestrial digital broadcast which uses 12 segments of plural segments (13 segments) obtained by dividing one channel, and the 1-segment broadcast is terrestrial digital broadcast which uses one segment of the plural segments.

Each of the first and second OFDM demodulation circuits 103 and 104 generates program data (more specifically, a transport stream) by performing given demodulation processing, error correction, and other processing on the signal component extracted by the corresponding one of the first and second digital tuners 101 and 102. The generated program data (transport stream) is input to the corresponding one of the first and second decoding circuits 105 and 106.

Each of the first and second decoding circuits 105 and 106 generates a digital video signal and a digital audio signal by performing decoding processing on the received transport stream. The first decoding circuit 105 is for 12-segment broadcast and the second decoding circuit 106 is for 1-segments broadcast.

The OSD circuit 107 superimposes an OSD (on-screen display) signal on the received digital video signal and outputs a resulting signal to the D/A converter 108. The OSD signal is generated by the CPU 112.

The D/A converter 108 converts the received digital video signal into an analog video signal and outputs the latter. The LCD panel 109 is a video display device for displaying video of a program being viewed using the analog video signal.

The switches 110 include various manipulation switches, and the memories 111 include memory devices such as RAM and ROM. Control programs and programs to be run by the CPU 112 are stored in the ROM. The RAM provides a work area that is necessary when the CPU 112 runs a program.

The CPU 112 controls the above-described components and modules according to the control programs stored in the memories 111 and controls video display and audio output in a unified manner. Furthermore, the CPU 112 serves as a program recording module for controlling simultaneous recording of a mobile program (described later) by operating according to a program recording program (described later). In performing simultaneous recording of a mobile program, the CPU 112 uses program data obtained through demodulation by the first and second OFDM demodulation circuits 103 and 104.

The HDD (hard disk drive) 113 serves as a storage device for recording, as terrestrial digital broadcast program data, data obtained through demodulation by the first and second OFDM demodulation circuits 103 and 104.

The connector of a USE cable 203 can be connected to the USB port 114. An HDD 201 for USB connection is connected to the USB port 114 via the USB cable 203.

A memory card 202 such as an SD memory card (secure digital memory card) is inserted into the card slot 115. The card slot 115 writes and reads data to and from the inserted memory card 202. Program data for a portable terminal device 250 and other data are recorded in the memory card 202.

The portable terminal device 250 is a mobile receiver which enables viewing of terrestrial digital broadcast programs, such as a cell phone, a PDA (personal digital assistant), or a portable music player.

The EPG decoding module 116 separates and extracts EPG data (described later) that is superimposed on program data obtained through demodulation by the first and second OFDM demodulation circuits 103 and 104.

The communication I/F 117 serves for exchanging information with a device (e.g., a LAN-compatible HDD 204) that is connected to a LAN terminal 118.

The LAN terminal 118 is used as a general LAN-compatible port of an Ethernet. A device such as the LAN-coznpatible, external HDD 204 is connected to the LAN terminal 118, and the LAN terminal 118 serves for exchanging information with that device.

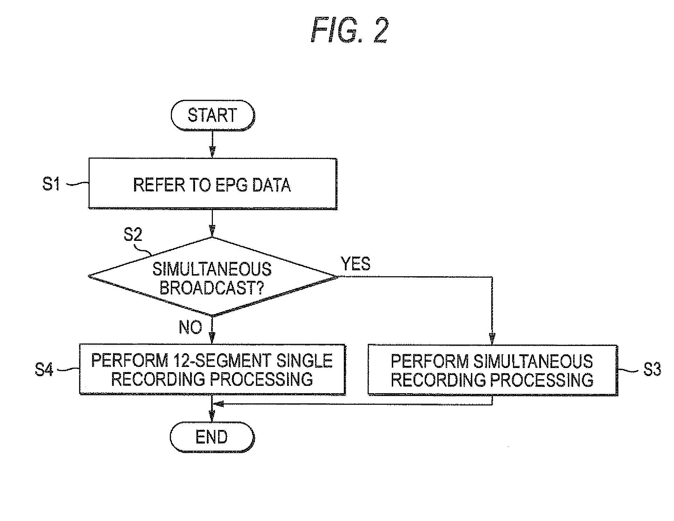

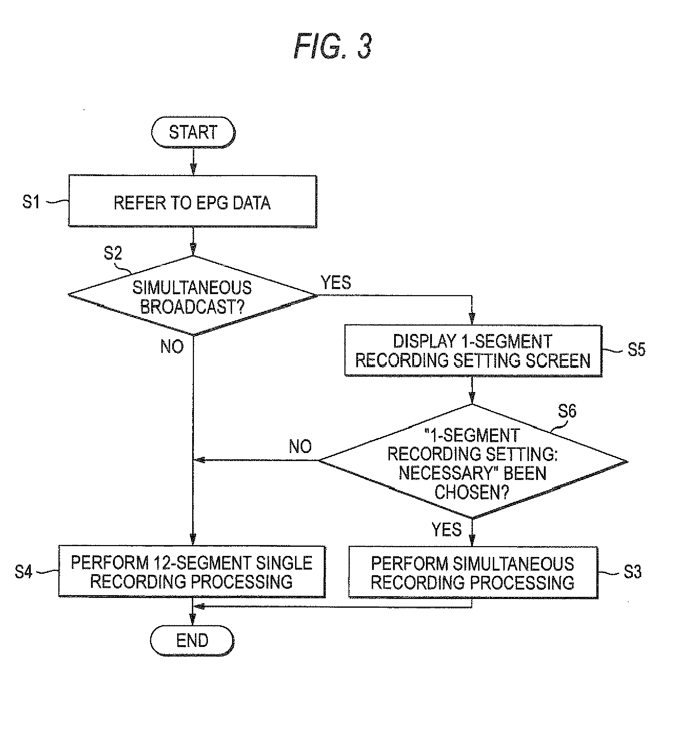

Next, simultaneous recording of a mobile program by the above-configured video recorder 100 will be described with reference to Figs. 2 and 3. Fig. 2 is a flowchart showing the operation procedure of a simultaneous recording process for a mobile program which is performed by the CPU 112 according to a program recording program. Fig. 3 is a flowchart showing the operation procedure of another simultaneous recording process. The CPU 112 executes a simultaneous recording process for a mobile program by operating according to the flowchart of Fig. 2 or 3.

The simultaneous recording of a mobile program in the video recorder 100 means recording a program for the portable terminal device 250 by recording, in the HDD 113, program data of a 1-segment broadcast program (hereinafter referred to as "1-segment program data") simultaneously with program data of a 12-segment broadcast program (hereinafter referred to as "12-segment program data") in the case where the 1-segment broadcast is a simultaneous broadcast of the 12-segment broadcast.

The CPU 112 performs the simultaneous recording process in accordance with the process shown in the flowchart of Fig. 2 or 3 when instructed to record a terrestrial digital broadcast program by a given manipulation made by using one of the switches 110 or a remote controller 400 (described later).

Upon starting the simultaneous recording process, at step S1 the CPU 112 refers to EPG (electronic program guide) data of a 1-segment broadcast and EPG data of a 12-segment broadcast that are acquired from the EPG decoding module 116.

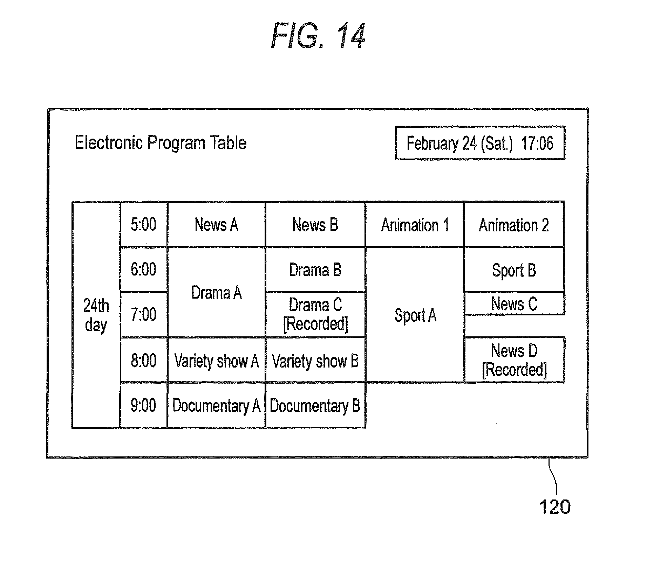

The EPG data is electronic program information. The video recorder 100 displays an electronic program table 120 (e.g., one as shown in Fig. 14) on the LCD panel 109 by separating service information (SI; described later) from a broadcast signal and using EPG data that is included in the SI.

In digital broadcast, EPG data is superimposed on a broadcast signal as service information (SI). The SI includes information that is necessary for viewing of a digital broadcast program and an event information table (EIT), and the EIT includes EPG data.

For example, the EPG data includes a program name (program title), a program genre, a program start time, a program end time, program contents, and other data. At step S2 (described later), it can be determined whether the 1-segment broadcast is a simultaneous broadcast of the 12-segment broadcast by comparing their program name data.

At step S2, the CPU 112 performs a simultaneity determination as to whether the 1-segment broadcast is a simultaneous broadcast of the 12-segment broadcast by operating as a determining module to compare the EPG data of the 1-segment broadcast with that of the 12-segment broadcast.

For example, as described above, the CPU 112 performs a simultaneity determination on the basis of at least a result of a comparison between program name data. Alternatively, the CPU 112 may perform a simultaneity determination on the basis of at least one of a pair of program names, a pair of program genres, and a pair of broadcast times. If match is found in all (three) of the program name, the program genre, and the broadcast time, the probability that the 1-segment broadcast is a simultaneous broadcast is high. Therefore, using program names, program genres, and broadcast times (three pairs of data) enables a correct simultaneity determination. The CPU 112 determines that the 1-segments broadcast is a simultaneous broadcast if program names, for example, coincide with each other completely. Alternatively, the CPU 112 may judge that the 1-segment broadcast is a simultaneous broadcast if program names, for example, coincide with each other with similarity of 90% or more, for example (partial match).

If determined that the 1-segments broadcast is a simultaneous broadcast of the 12-segment broadcast, the CPU 112 proceeds the process to step S3. If determined that the 1-segment broadcast is not a simultaneous broadcast of the 12-segment broadcast, the CPU 112 proceeds the process to step S4.

At step S3, the CPU 112 performs simultaneous recording processing, that is, records, in the HDD 113, 12-segment program data and 1-segment program data of the 1-segment broadcast which has been determined a simultaneous broadcast of the 12-segment broadcast. In this example, the 12-segment program data and the 1-segments program data are recorded in the HDD 113 simultaneously (recording start times are set the same). Alternatively, for example, the recording start time of the 1-segment program data may be delayed a little from that of the 12-segment program data so that their recording end times become the same. At this step, the CPU 112 operates as an identification data storing module. When the 12-segment program data is recorded, identification data indicating that the program data is 12-segment program data is stored in the HDD 113. When the 1-segment program data is recorded, identification data indicating that the program data is 1-segment program data is stored in the HDD 113.

At step S4, the CPU 112 performs single recording processing, that is, records only the 12-segment program data in the HDD 113. Upon executing step S3 or S4, the CPU 112 finishes the simultaneous recording process for a mobile program.

When the video recorder 100 has performed the simultaneous recording process for a mobile program in the above-described manner, 12-segment program data and 1-segment program data are automatically recorded in the HDD 113 if the 1-segment broadcast is a simultaneous broadcast of the 12-segment broadcast. In this case, since the 12-segment program data and the 1-segment program data which is program data of a simultaneous broadcast of the 12-segment broadcast are recorded in the HDD 113, the two program data are data of the same program. Therefore, in the video recorder 100, the mobile program can be recorded in such a manner that the 12-segment program data and the 1-segment program data which is of the same program as the former are recorded reliably. Since high-rate program data and low-rate program data of the same program are retained, the two data can be used properly without re-encoding.

In this case, the same program as the 12-segment broadcast program can be viewed by using the portable terminal device 250 by, for example, moving only the 1-segment program data from the HDD 113 to the memory card 202 and inserting the memory card 202 into the portable terminal device 250.

Being larger in data size than 1-segment program data, 12-segment program data is not suitable for an operation of moving it to the memory card 202 and viewing it with the portable terminal device 250. On the other hand, being lower in rate than 12-segment program data, 1-segment program data is not suitable for reproduction by the video recorder 100. However, merely recording 12-segment program data and 1-segment program data simultaneously does not assure that program data of the same program are recorded.

In view of the above, in the video recorder 100, a simultaneity determination is made in the above-described manner and 12-segment program data and 1-segments program data are recorded in the HDD 113 simultaneously if the 1-segment program data is determined program data of a simultaneous broadcast of the 12-segment broadcast.

The flowchart of Fig. 3 is different from the flowchart of Fig. 2 in that steps S5 and S6 are inserted between steps S2 and S3/S4.

When proceeding to step S5 from step S2, the CPU 112 causes the LCD panel 109 to display a recording setting screen 300 (described later). At the next step S6, the CPU 112 determines whether "1-segment recording: necessary" has been chosen in the recording setting screen 300. The CPU 112 proceeds the process to step S3 if it has been chosen, and moves to step S4 if not. The other steps are the same as in Fig. 2.

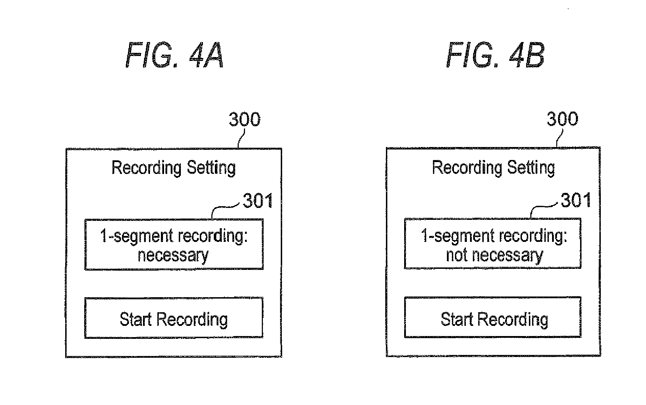

As shown in Fig. 4, the recording setting screen 300 has an input space 301 which allows a viewer to make an input as to the necessity of i-segment recording. Fig. 4A shows an example where 1-segment recording is necessary and Fig. 4B shows an example where 1-segments recording is not necessary. If 1-segment recording is necessary, the process moves from step S6 to step S3. Therefore, if it is determined that the 1-segments broadcast is a simultaneous broadcast, the 1-segment program data and the 12-segment program data are recorded in the HDD 113 simultaneously.

As described above, where the simultaneous recording process for a mobile program is performed according to the flowchart of Fig. 3, a viewer can choose whether 1-segment recording is necessary or not. Simultaneous recording of the mobile program is performed or not performed according to a choice of the user.

Incidentally, if 12-segment program data and 1-segment program data that have been recorded by the simultaneous recording process for a mobile program are handled equally without being discriminated from each other, it is difficult to increase the ease of use of a viewer, because they are different in the apparatus suitable for reproduction.

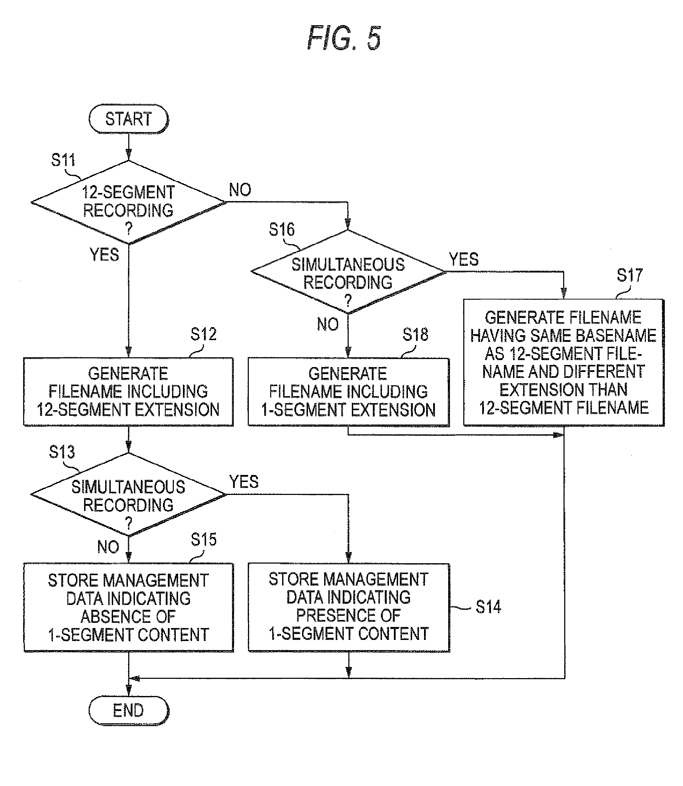

In view of this, the video recorder 100 operates according to flowcharts of Figs. 5-7. In the video recorder 100, the CPU 112 operates as a correlating module. The CPU 112 correlates 1-segments program data with 12-segment program data by generating, in the following manner, a filename of a 12-segment file (stationary receiver file) to be used for recording 12-segment program data in the HDD 113 or a 1-segment file (mobile receiver file) to be used for recording 1-segment program data in the HDD 113.

In the case of simultaneous recording of a mobile program, 12-segment program data and 1-segment program data are correlated with each other by filenames and recorded in the HDD 113.

Upon starting a correlating process according to the flowchart of Fig. 5, at step S11 the CPU 112 determines whether 12-segment recording (i.e., recording for 12-segment program data) should be performed. The CPU 112 proceeds the process to step S12 if 12-segment recording should be performed, and moves to step S16 if not. At step S12, the CPU 112 generates a filename of a 12-segment file. As described later, a filename consists of a basename and an extension (a character string for identification of a file type). At step S12, the CPU 112 generates an extension that is specific (dedicated) to the 12-segment broadcast.

At step S13, the CPU 112 determines whether to perform simultaneous recording processing (S3). The CPU 112 proceeds the process to step S14 if simultaneous recording processing should be performed, and moves to step S15 if not. At step S14, the CPU 112 stores data indicating that 1-segment program data is present (1-segments recording is necessary) in the HDD 113 as management data to be used for managing presence/absence of simultaneous broadcast 1-segment program data for 12-segment program data. At step S15, the CPU 112 stores data indicating that 1-segment recording is not necessary in the HDD 113 as management data. Then, the correlating process is finished. In executing step S14 or S15, the CPU 112 operates as a management data storing control module.

On the other hand, when proceeding to step S16 from step S11, the CPU 112 determines whether to perform simultaneous recording processing (S3) as at step S13. The CPU 112 proceeds the process to step S17 if.simultaneous recording processing should be performed, and moves to step S18 if not. At step S17, the CPU 112 generates a filename of a 1-segment file. In this case, the CPU 112 generates a filename having the same basename as the filename of the corresponding 12-segment file and a different extension from the extension of the corresponding 12-segment file. At step S17, the CPU 112 generates an extension that is specific (dedicated) to the 1-segments broadcast.

At step S18, the CPU 112 generates a filename including a basename corresponding to a 1-segment broadcast program being recorded solely and an extension specific to the 1-segment broadcast. The correlating process is finished upon execution of step S17 or S18.

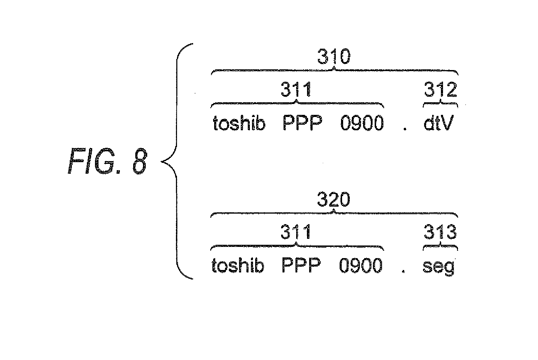

When simultaneous recording of a mobile program has been performed after execution of the above correlating process, a 12-segment file is given, for example, a filename 310 shown in Fig. 8 and a 1-segments file is given, for example, a filename 320 shown in Fig. 8. The filename 310 includes a basename 311 and an extension 312, and the filename 320 includes the basename 311 and an extension 313.

The filenames 310 and 320 have the same basename 311 (in Fig. 8, "toshib PPP 0900"). The extension 312 is a character string specific to the 12-segment broadcast (e.g., "dtV" (see Fig. 8)), and the extension 313 is a character string specific to the 1-segment broadcast (e.g., "sea").

Since the filenames 310 and 320 have the same basename 311 and are different from each other only in the extension, it is clear to a viewer that the 12-segment file and the 1-segment file are correlated with each other. Furthermore, the extensions 312 and 313 are character strings specific to the 12-segment broadcast and the 1-segment broadcast, respectively, it is apparent from the filename whether the program data is of a 12-segment broadcast or a 1-segment broadcast. A viewer can determine of which kind of broadcast the program data is, merely by viewing at the filename.

In the video recorder 100, since a 12-segment file and a 1-segment file are correlated with each other in the above-described manner, such a manipulation as moving or deleting the 12-segment file can be linked with a manipulation on the 1-segment file. This gives a user enhanced ease of use.

For example, when a transition is made from a screen of a 12-segment broadcast program list 350 (described later) to a screen of a 1-segment broadcast program list 360, the cursor is caused to point a program that is correlated with a program that was pointed by the cursor in the program list 350.

When a transition is made to a screen of the 1-segment broadcast program list 360 after an instruction to move or copy program data was made in the program list 350, program data that is correlated with the program data whose movement or copying was commanded in the program list 350 is moved or copied.

When a transition is made to a screen of the 1-segment broadcast program list 360 after an instruction to delete program data was made in the program list 350, program data that is correlated with the program data whose deletion was commanded in the program list 350 is deleted.

When a transition is made to a screen of the 1-segments broadcast program list 360 after an instruction to lock or unlock program data was made in the program list 350, program data that is correlated with the program data whose locking or unlocking was commanded in the program list 350 is locked or unlocked.

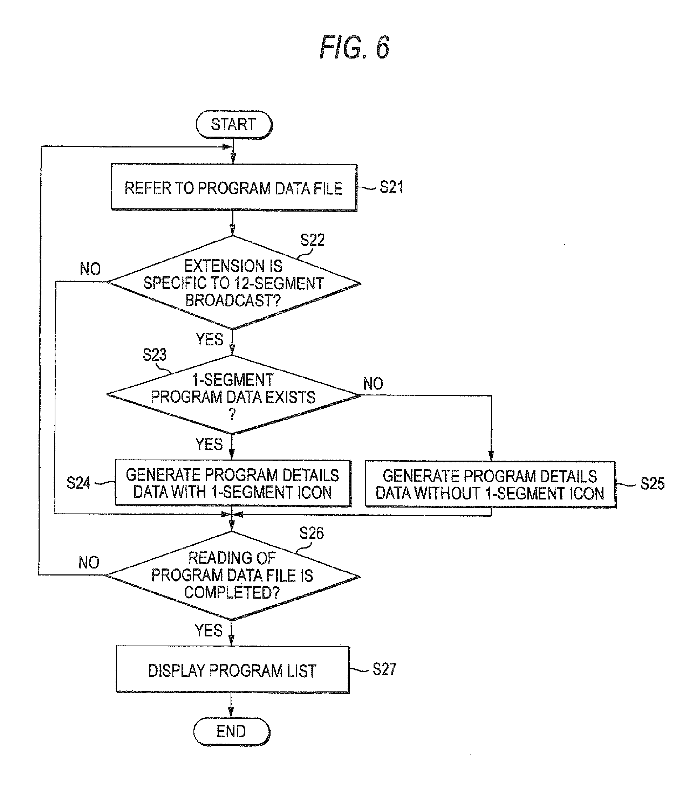

The video recorder 100 displays a program list 350 by operating according to the flowchart of Fig. 6.

Upon starting a program list display process according to the flowchart of Fig. 6, at step S21 the CPU 112 refers to a program data file that is stored in the HDD 113. The program data file contains a 12-segment file or a 1-segment file. At step S22, the CPU 112 determines whether the extension of the filename of the referenced program data is the one specific to the 12-segment broadcast. The CPU 112 proceeds the process to step S23 if the determination result is affirmative, and moves to step S26 if it is negative. In this manner, program data files whose extensions are the one specific to the 1-segment broadcast are prevented from being displayed in a program list 350.

At step S23, the CPU 112 determines whether the management data indicates that 1-segments program data is present or absent. The CPU 112 proceeds the process to step S24 if 1-segment program data is present, and moves to step S25 if not.

At step S24, the CPU 112 generates program details data including a 1-segments icon 351a (described later). At step S25, the CPU 112 generates program details data not including a 1-segment icon. At step S26, the CPU 112 determines whether the reading of program data files has completed. The CPU 112 proceeds the process to step S27 if the reading has completed, and returns the process to step S21 if not.

At step S27, the CPU 112 displays a program list 350 using the program details data that have been generated at steps S24 and S25. Then, the program list display process is finished. The video recorder 100 has stored management data by executing steps S14 and S15. Those management data are referred to at step z523. In this manner, presence/absence of 1-segments program data can be determined more easily than in a case that all 12-segment data are referred to.

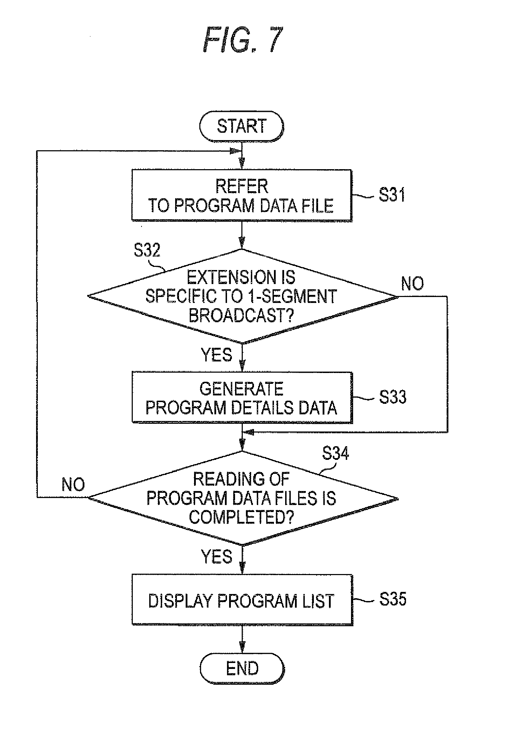

The video recorder 100 displays a program list 360 by operating according to the flowchart of Fig. 7.

Upon starting a program list display process according to the flowchart of Fig. 7, at step S31 the CPU 112 refers to a program data file that is stored in the HDD 113. At the next step S32, the CPU 112 determines whether the extension of the filename of the referenced program data file is the one specific to the 1-segments broadcast. The CPU 112 proceeds the process to step S33 if the determination result is affirmative, and moves to step S34 if it is negative. In this manner, only program data files whose extensions are the one specific to the 1-segments broadcast are displayed in a program list 360.

At step S33, the CPU 112 generates program details data. At step S34, the CPU 112 determines whether the reading of program data files have completed. The CPU 112 proceeds the process to step S35 if the reading has completed, and return to step S31 if not.

At step S35, the CPU 112 displays a program list 360 using the program details data that have been generated at step S33. Then, the program list display process is finished.

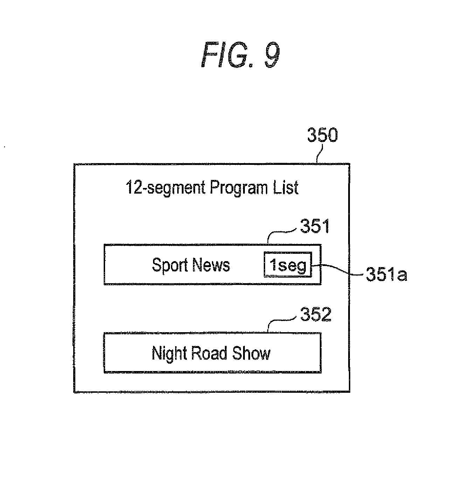

The program list 350 is a list of recorded programs of 12-segment broadcast and has, for example, program detailss 351 and 352 as shown in Fig. 9. The program details 351 has a 1-segment icon 351a. The 1-segments icon 351a indicates that simultaneous recording processing has been performed and, as a result, 1-segment program data which is program data of a simultaneous broadcast of a 12-segment broadcast is recorded in the HDD 113 in addition to the 12-segment program data. Therefore, the program details 351 corresponds to a filename of a 12-segment file that was stored through execution of the above-described steps S3 and S14. Since the program details 352 does not have a 1-segment icon, only 12-segment program data is recorded in the HDD 113 as corresponding program data. Therefore, the program details 352 corresponds to a filename of a 12-segment file that was stored through execution of the above-described steps S4 and S15.

As described above, a viewer can recognize whether 1-segment program data of the same program as 12-segment program data is stored in addition to the 12-segment program data or only the 12-segment program data is stored by checking whether a program details displayed in a program list 350 has a 1-segments icon 351a.

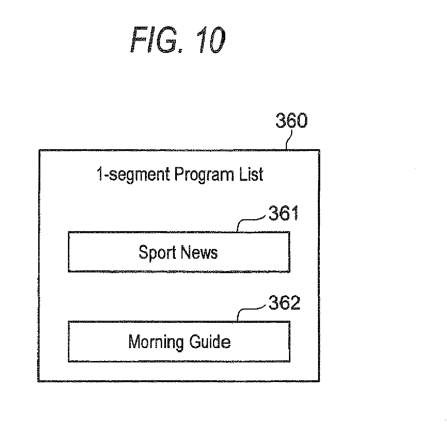

The program list 360 is a list of recorded programs of 1-segment broadcast and has, for example, program detailss 361 and 362 as shown in Fig. 10. The program details 361 has the same program name "Sport News" as the program details 351. Therefore, a viewer can recognize, from the program list 360, that 1-segment program data of the same program as 12-segment program data is recorded. The program details 361 corresponds to a filename of a 1-segment file that was stored through execution of the above-described steps S3 and S14. The program details 362 corresponds to a filename of a 1-segments file that was stored solely.

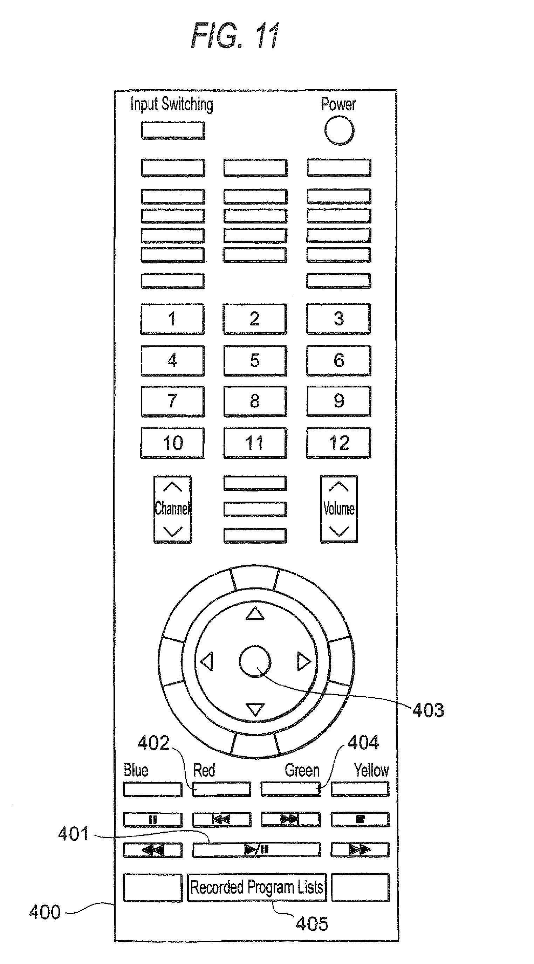

When a viewer places the cursor on the program details 351 or 352 in the program list 350 or the program details 361 or 362 in the program list 360 and presses a reproduction button 401 of a remote controller 400 shown in Fig. 11, the CPU 112 reads the corresponding program data from the HDD 113 and reproduces the recorded program.

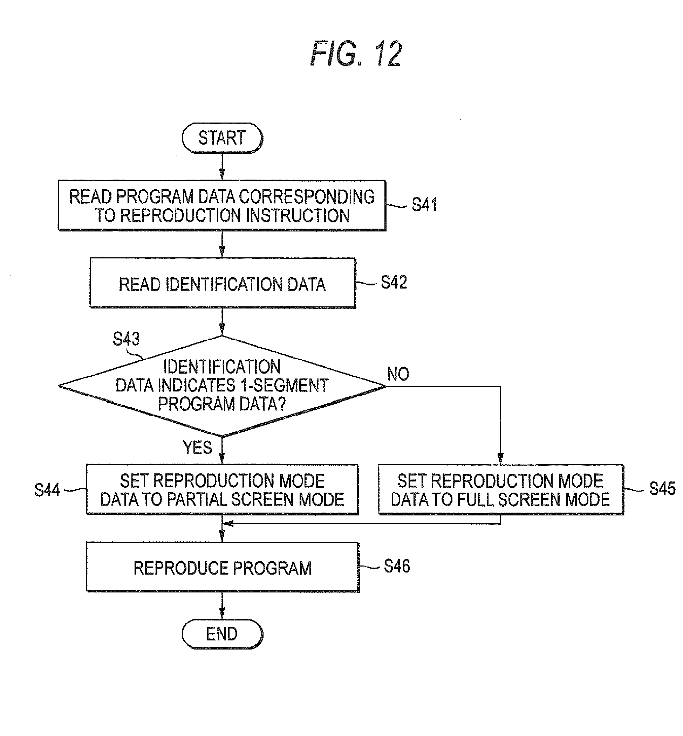

In this case, the CPU 112 operates as a reproducing module, that is, operates according to a flowchart of Fig. 12, whereby a program is reproduced in such a manner that the display size of a reproduced image (called "image size") is changed depending on whether 12-segment program data or 1-segments program data is used.

Upon starting a reproduction control process, at step S41 the CPU 112 reads, from the HDD 113, program data corresponding to a reproduction instruction made by the reproduction button 401. At step S42, the CPU 112 reads identification data corresponding to the read-out program data from the HDD 113. At step S43, the CPU 112 operates as a data determining module, that is, determines whether the identification data indicates 1-segment program data. The CPU 112 proceeds the process to step S44 if the identification data indicates I-segment program data, and moves to step S45 if not. At step S44, the CPU 112 sets reproduction mode data (for determining a program reproduction mode) to a partial screen mode. At step S45, the CPU 112 sets the reproduction mode data to a full screen mode. At the next step S46, the CPU 112 operates as a reproducing module, that is, reproduces the program according to the thus-set reproduction mode data. Then, the reproduction control process is finished.

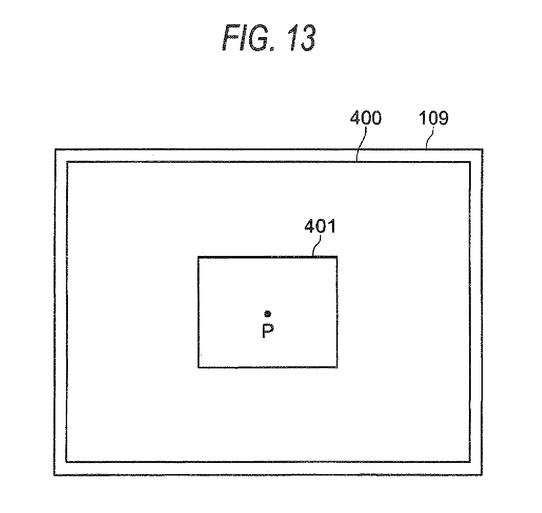

Where a program is to be reproduced in the full screen mode, an image is displayed over the entire display screen 400 of the LCD panel 109 as shown in Fig. 13. Where a program is to be reproduced in the partial screen mode, an image is displayed only in a 1-segment reproduction area 401. Black display is performed (no image is displayed) in the area other than the reproduction area 401. The reproduction area 401 is a reproduction area for a mobile receiver and is an area including the center P of the display screen 400. The size of the reproduction area 401 is set smaller than the display screen 400 so that no noticeable image roughness appears. Although in this example the reproduction area 401 is set so as to include the center P, it may be set so as not to include the center P, that is, it may be set as a right end area or a left end area.

Being lower in rate and smaller in the number of pixels than 12-segment program data, 1-segment program data is suitable for reproduction on screens that are smaller than screens of stationary receivers. Therefore, displaying an image over the entire display screen 400 using 1-segment program data as it is not preferable because noticeable image roughness appears. In view of this, in the video recorder 100, a program is reproduced in such a manner that the image size is changed depending on whether the program data is 1-segment program data. When the program data is 12-segment program data, the program is reproduced by displaying an image over the entire display screen 400 so that a clear, fine image is displayed on the large screen. On the other hand, when the program data is 1-segment program data, an image is displayed only in the reproduction area 401 which is smaller than the display screen 400 so that the program is reproduced without noticeable roughness.

The above embodiment is directed to the example TV receiver with a recording function which is equipped with the video display module for displaying video of a terrestrial digital broadcast program and the program recording module for recording the program. However, the invention can also be applied to video recorder having no video display module, such as a DVD recorder and an HDD recorder.

The video recorder 100 according to the above embodiment is equipped with the receiving module for receiving 1-segment broadcast programs and the receiving module for receiving 12-segment broadcast programs. However, the receiving module may be such as to be able to receive broadcast for mobile receivers and broadcast for stationary receivers, that is, the video recorder 100 may be equipped with receiving module for receiving broadcasts that are neither 1-segment broadcast nor 12-segment broadcast. For example, the video recorder 100 may be equipped with receiving module for receiving broadcast for mobile receivers and broadcast for stationary receivers in which the frequency bandwidth of one channel is not divided into segments.

As described above in detail, the invention provides a video recorder and a method for recording and reproducing programs which reproduces a program without noticeable image roughness even in the case of using program data for mobile apparatus.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A video recorder comprising:
a recording module configured to record, in a storage device, first program data of a first broadcast directed to a mobile receiver and second program data of a second broadcast directed to a stationary receiver, the first broadcast and the second broadcast being broadcasted as a terrestrial digital broadcast; and
a reproducing module configured to control a display device to display a video image contained in either the first program data or the second program data stored in the storage device,
wherein the reproducing module controls the display device to display the video image contained in the first program data in a first size smaller than a second size in which the video image contained in the second program data is to be displayed.

2. The video recorder of claim 1, wherein the reproducing module controls the display device to display the video image contained in the second program data over an entire screen of the display device.

3. The video recorder of claim 2, wherein the reproducing module controls the display device to display the video damage contained in the first program data in a reproduction area having a given size and being set to include the center of the screen of the display device.

4. The video recorder of claim 1 further comprising an identification data storing module configured to store, in the storage device, identification data indicating whether program data recorded in the recording module is the first program data or the second program data.

5. The video recorder of claim 4 further comprising a data determining module configured to determine whether the program data recorded in the recording module is the first program data or the second program data based on the identification data,
wherein the reproducing module is configured to change an image size of the video image to be either of the first size or the second size based on the determination by the data determining module.

6. The video recorder of claim 1 further comprising a broadcast determining module configured to determine whether the first broadcast is a simultaneous broadcast of the second broadcast,
wherein the program recording module simultaneously records the first program data and the second program when the broadcast determining module determines that the first broadcast is the simultaneous broadcast of the second broadcast.

7. The video recorder of claim 6 further comprising a correlating module configured to correlate the first program data and the second program data when the broadcast determining module determines that the first broadcast is the simultaneous broadcast of the second broadcast,
wherein the program recording module records the first program data and the second program data being correlated with each other in the storage device.

8. The video recorder of claim 7, wherein the correlating module correlates the first program data and the second program data by assigning a first filename including a basename and a first extension to the first program data and assigning a second filename including the basename and a second extension, the first extension and the second extension being used for used for identifying a file type of the first program data and the second program data.

9. The video recorder of any one of claims 1-8 further comprising the display device.

10. A method for recording and reproducing programs, the method comprising:
recording, in a storage device, first program data of a first broadcast directed to a mobile receiver and second program data of a second broadcast directed to a stationary receiver, the first broadcast and the second broadcast being broadcasted as a terrestrial digital broadcast;
reproducing a video image contained in either the first program data or the second program data stored in the storage device by controlling a display device to display the video image; and
controlling the display device to display the video image contained in the first program data in a first size smaller than a second size in which the video image contained in the second program data is to be displayed.
